# EUROPÄISCHE PATENTSCHRIFT

(11) **EP 1 230 004 B1**
(45) Veröffentlichungstag und Bekanntmachung des Hinweises auf die Patenterteilung: **23.07.2003**
(21) Anmeldenummer: 00976034.9
(22) Anmeldetag: 16.11.2000
(51) Int. Cl.: B01J 2/22, B30B 15/00

(54) **KOMPAKTIERANLAGE FÜR SCHÜTTGÜTER**
COMPACTING SYSTEM FOR BULK MATERIAL
INSTALLATION DE COMPRESSION POUR MATIERES EN VRAC

(30) Priorität: 17.11.1999 DE 19955484; 19.02.2000 DE 10007731
(43) Veröffentlichungstag der Anmeldung: 14.08.2002
(73) Patentinhaber: Alexanderwerk Aktiengesellschaft, D-42857 Remscheid (DE)
(72) Erfinder: EGGERT, Axel, 40789 Monheim (DE)
(74) Vertreter: Knauf, Rudolf, Dipl.-Ing.
(86) Internationale Anmeldenummer: EP0011368
(87) Internationale Veröffentlichungsnummer: WO01036079

(56) Entgegenhaltungen:
- DE-A- 3 806 398
- US-A- 4 439 384
- US-A- 5 184 779

## Beschreibung

Die Erfindung betrifft eine Kompaktieranlage für Schüttgüter mit einer Walzenpresse und einem ihr vorgeordneten Schneckenförderer, über dem als Schüttgutzuführung ein Aufgabetrichter angeordnet ist.

Rohprodukte, die als Pulver oder Korn oder gemischt anfallen, sind häufig für eine unmittelbare Weiterverarbeitung, z.B. in der pharmazeutischen Industrie zu Tabletten, nicht geeignet, weil sie einen zu hohen Luftanteil haben und/oder nicht ausreichend rieselfähig sind. Aus der Patentliteratur (DE 34 31 865 C2), aber vor allem aus der Praxis, ist es bekannt, die Rohprodukte vor der Weiterverarbeitung zu kompaktieren und anschließend zu granulieren. Zum Kompaktieren setzt man beispielsweise eine Walzenpresse mit einem vorgeordneten Schneckenförderer ein. Mittels des Schneckenförderers wird aus einem Aufgabetrichter das Rohprodukt in den Walzenspalt unter einem gewissen Druck zugeführt. Da die Walzenpresse an beiden Seiten abgedichtet ist und der Schneckenförderer dicht am Walzenspalt angeschlossen ist, muß die beim Kompaktieren aus dem Rohprodukt herausgepreßte Luft den Materialstrom im Schneckengehäuse entgegen seiner Förderrichtung durchwandern. Die Luft kann dann nur über die im Aufgabetrichter befindliche Materialsäule entweichen, die allerdings in Abhängigkeit von ihrer Höhe und Dichte der Luft einen gewissen Widerstand entgegensetzt. Ein Teil der Luft gelangt aber auch "explosionsartig" durch den Walzenspalt, wodurch die Walzenpresse belastet wird und unruhig läuft.

Beim Kompaktieren kommt es darauf an, daß die beim Kompaktieren entstehenden Schülpen möglichst homogen sind, weil diese Eigenschaft sich unmittelbar im Endprodukt auswirkt. Sofern im Aufgabetrichter das Rohprodukt bezüglich der Korngröße oder hinsichtlich anderer Eigenschaften nicht gleichmäßig verteilt ist, kommt es zu inhomogenen Schülpenqualitäten. Dies ist besonders dann der Fall, wenn ein Anteil des kompaktierten Materials, das nach dem Granulieren nicht die gewünschte Korngröße aufweist, in den Aufgabetrichter zurückgeführt wird. Die unmittelbare Rückführung dieses kompaktierten Rohproduktes ist nicht unproblematisch, weil die Schüttdichten dieses kompaktierten Rohproduktes und des unbehandelten Rohproduktes sehr unterschiedlich sind. Ein unbehandeltes Rohprodukt, das eine Schüttdichte von 200gr/l hat, kann nach dem Kompaktieren als Rücklaufgut eine Schüttdichte von 800gr/l haben.
Erschwerend kommt hinzu, daß der Massenstrom des Rücklaufgutes stark schwankt. Bei weichen Schülpen ist der der Walzenpresse zugeführte anteilige Massenstrom des Rücklaufgutes groß, was sich günstig auf eine homogene Schülpenqualität auswirkt, was aber wiederum zur Folge hat, daß der Massenstrom des Rücklaufs abnimmt. Im Prozeß kommt es deshalb nur langsam zu einer Stabilisierung der Schülpenqualität. Aus diesem Grunde wurde bisher der Massenstrom des Rücklaufs mit dem Rohprodukt vor der Kompaktierung einem zusätzlichen Mischvorgang unterworfen.

Ferner ist eine Kompaktieranlage für Schüttgüter bekannt (DE 38 06 398 A1), bei der über einer Walzenpresse ein Aufgabetrichter mit zwei Schächten angeordnet ist, aus denen parallel der Walzenspalt mit verschiedenartigen Schüttgütern gefüttert wird. Die Anteile der verschiedenartigen Schüttgüter, die aus den verschiedenen Schächten dem Walzenspalt zugeführt werden, kann durch ein Dosierorgan eingestellt werden. Eine besondere Vermischung der Schüttgüter vor dem Walzenspalt ist nicht vorgesehen. Aus dem Walzenspalt tritt das Schüttgut zerkleinert und teilweise agglomeriert, d.h. zu Schülpen verpreßt, aus. Die Schülpen werden in der Regel in einer Kugelmühle auf die Endfeinheit gemahlen und einem Sichter zugeleitet, dessen Grobaustrag als Feingut in dem Schacht mit der Feingutaufgabe zurückgeführt wird. Die Entlüftung der Schüttgüter findet über die Materialsäule im Schacht für das grobe Schüttgut statt.

Aufgabe der Erfindung ist es, eine Anlage zum Kompaktieren von pulverförmigem und körnigem Schüttgut der eingangs genannten Art zu schaffen, die ein möglichst homogenes kompaktiertes Produkt erzeugt.

Diese Aufgabe wird erfindungsgemäß bei einer Kompaktieranlage der eingangs genannten Art dadurch gelöst, daß der Aufgabetrichter mindestens zwei in Förderrichtung des Schneckenförderers hintereinander liegende Schächte aufweist, aus denen der Schneckenförderer mit verschiedenartigen Schüttgütern gefüttert und bis auf den in Förderrichtung letzten Schacht unterfüttert wird, wobei der Walzenpresse inline ein Granulator mit einer Trenneinrichtung für das Granulat nachgeordnet ist, die das Granulat nach Korngröße trennt, und wobei von der Trenneinrichtung eine zu einem der in Förderrichtung vorderen Schächte führenden Rückführung zur unmittelbaren Weiterverarbeitung ungeeigneten Granulates ausgeht.

Mit der erfindungsgemäßen Kompaktieranlage wird über den gesamten Produktionsprozeß eine homogene Schülpenqualität gewährleistet. Dafür ist wesentlich, daß von Anfang an das Rohprodukt und weitere Komponenten aus den verschiedenen Schächten parallel dem Schneckenförderer zugeführt werden. Dies ist möglich, weil die Komponenten aus dem oder den in Förderrichtung vorderen Schächten den Schneckenförderer nur teilfüttern, während das Rohprodukt aus dem letzten Schacht den Schneckenförderer auffüllt. Durch die getrennte, in Förderrichtung des Schneckenförderers erfolgende Materialzufuhr unter Einschluß des von der Trenneinrichtung rückgeführten Granulates ergibt sich in Verbindung mit dem als Mischer wirkenden Mehrfachschneckenförderer eine optimale Mischung des zu kompaktierenden Materials. Günstig für die Entlüftung wirkt sich aus, daß herausgepreßte Luft nicht länger die gesamte Materialsäule in dem in der Regel vollen, letzten Schacht durchwandern muß, sondern nur die allenfalls nur kleine Materialsäule in dem einen oder anderen der vorgeordneten, in der Regel praktisch leeren Schächte.

Da der rückzuführende Anteil an nicht unmittelbar zur Weiterverarbeitung geeignetem Material in der Regel gering ist, ist gewährleistet, daß der mit diesem Material beaufschlagte Schacht des Aufgabetrichters allenfalls nur teilweise gefüllt wird, so daß die Entlüftung über diesen Schacht ohne großen Widerstand möglich ist.

Vorzugsweise wird einer der in Vorderrichtung ersten Schächte mit Granulat größerer Körnung gefüttert. "Größerer Körnung" soll heißen, daß es eine größere Körnung als das Rohprodukt hat. Es hat sich gezeigt, daß dieses Material gut zum Reinigen der Schneckengänge und zum anderen als Einzugshilfe an der Walzenpresse geeignet ist.

Im folgenden wird die Erfindung anhand einer Zeichnung näher erläutert, die die Kompaktieranlage teilweise schematisch darstellt.

Die Kompaktieranlage besteht aus einem Teil 1 zum Kompaktieren des Rohproduktes, einem Teil 2 zum Granulieren und einem Teil 3 zum Sieben des Granulates.

Der erste Teil 1 umfaßt eine Walzenpresse 4 mit horizontaler Materialzuführung. Das zu kompaktierende Material wird über eine Schneckenförderer 5 mit Schneckengehäuse 5a und Mehrfachschnecke 5b zum Mischen des zugeführten Materials dem Walzenspalt der Walzenpresse 4 unter Druck zugeführt. Der Schneckenförderer 5 ist dicht am Walzenspalt angeschlossen. Die Walzenpresse 4 ist seitlich durch Abdeckbleche 6 abgedichtet. Über dem Schneckenförderer 5 befindet sich ein Aufgabetrichter für pulverförmiges bis körniges Gut, der in einen vorderen Schacht 7 und einen hinteren Schacht 9 unterteilt ist. In dem Schacht 7 ist ein Rotor 8 zum Bewegen des Rohproduktes angeordnet, damit es im Schacht 7 nicht hängenbleibt.

In den Schacht 7 wird das pulverförmiges Rohprodukt eingegeben. Der Schneckenförderer 5 speist es unter Druck in den Walzenspalt der Walzenpresse 4 ein, wo es zu Schülpen S kompaktiert wird. Die Schülpen S werden anschließend im Teil 2 der Anlage granuliert. Da das Granulat G regelmäßig eine breite Körnungspalette hat, ist es für die Weiterverarbeitung nicht gut geeignet. Deshalb wird es in einem anschließenden Teil 3 der Anlage in für die Weiterverarbeitung geeignetes Granulat G₁ und in in den Schacht 9 des Aufgabetrichters rückzuführendes Granulat G₂ getrennt. Der Massenstrom des Granulates G₂ ist klein, so daß mit ihm der Schneckenförderer 5 nur teilgefüttert wird. Aufgefüttert wird es von dem unbehandelten Material im Schacht 7. So wird schon zu einem sehr frühen Zeitpunkt im Produktionsprozeß der Schneckenförderer aus mehreren Schächten 7,9 parallel mit Material verschiedener Qualität gespeist. Das wirkt sich positiv auf die gewünschte homogen Schülpenqualität aus.

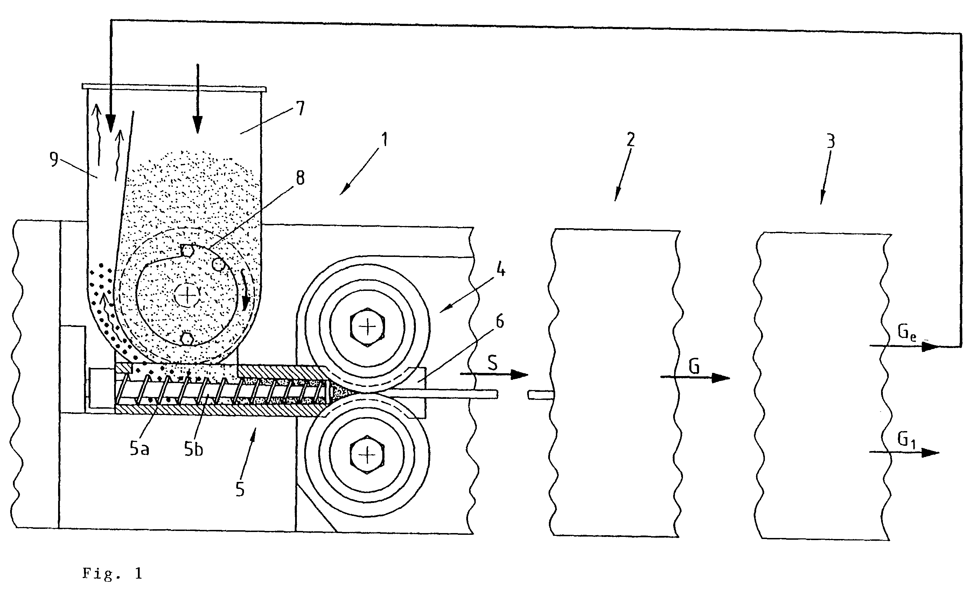

## Patentansprüche

1. Kompaktieranlage für Schüttgüter mit einer Walzenpresse (4) und einem ihr vorgeordneten Schneckenförderer (5), über dem als Schüttgutzuführung ein Aufgabetrichter (7,9) angeordnet ist,
**dadurch gekennzeichnet, daß** der Aufgabetrichter (7,9) mindestens zwei in Förderrichtung des Schneckenförderers (5) hintereinander liegende Schächte (7,9) aufweist, aus denen der Schneckenförderer (5) mit verschiedenartigen Schüttgütern gefüttert und bis auf den in Förderrichtung letzten Schacht (7) unterfüttert wird, wobei der Walzenpresse (4) inline ein Granulator (2) mit einer Trenneinrichtung (3) für das Granulat (G) nachgeordnet ist, die das Granulat (G) nach Korngröße trennt, und wobei von der Trenneinrichtung (3) eine zu einem der in Förderrichtung vorderen Schächte (9) führende Rückführung zur unmittelbaren Weiterverarbeitung ungeeigneten Granulates (G₂) ausgeht.

2. Kompaktieranlage nach Anspruch 1,
**dadurch gekennzeichnet, daß** der Schneckenförderer (5) als Mehrfachschnecke zum Mischen von Schüttgut ausgebildet ist.

3. Kompaktieranlage nach Patentanspruch 1 oder 2,
**dadurch gekennzeichnet, daß** einer der in Förderrichtung ersten Schächte (9) mit Granulat (G) großer Körnung gefüttert wird.

## Claims

1. A compacting system for bulk goods having a roller press (4) and a screw conveyor (5) positioned before it, over which a delivery funnel (7, 9) is positioned as a bulk goods supply,
**characterized in that** the delivery funnel (7, 9) has at least two shafts (7, 9), lying one behind the other in the conveyor direction of the screw conveyor (5), from which the screw conveyor (5) is fed with various bulk goods and is lined up to the last shaft (7) in the conveyor direction, a granulator (2), having a separating device (3) for the granulate (G), which separates the granulate (I) according to grain size, being positioned inline after the roller press (4), and a return guide, which leads to the front shaft (9) in the conveyor direction, originating from the separating device (3) for immediate reprocessing of unsuitable granulate (G₂).

2. The compacting system according to Claim 1,
**characterized in that** the screw conveyor (5) is implemented as a multiscrew for mixing bulk goods.

3. The compacting facility according to Claim 1 or 2,
**characterized in that** a first shaft (9) in the conveyor direction is fed with granulate (G) of larger grain size.

## Revendications

1. Installation de compactage pour matières en vrac comprenant une presse à rouleaux (4) et un dispositif de transfert à vis sans fin (5) qui est disposé en amont de celle-ci et au-dessus duquel est disposée une trémie d'alimentation (7, 9) servant de moyen d'acheminement de matières en vrac, **caractérisée en ce que** la trémie d'alimentation (7, 9) comprend au moins deux compartiments de descente (7, 9) qui sont disposés l'un derrière l'autre suivant la direction de transfert du dispositif de transfert à vis sans fin (5) et à partir desquels le dispositif de transfert à vis sans fin (5) est alimenté en matières en vrac de types divers et est sous-alimenté à l'exception du dernier compartiment de descente (7) suivant la direction de transfert, tandis qu'il est prévu, disposé en aval de la presse à rouleaux (4) et en ligne, un granulateur (2) comportant un dispositif de séparation (3) pour le granulat (G) qui sépare le granulat (G) fonction de la granulométrie et que part du dispositif de séparation (3) un moyen de recyclage qui mène à l'un des compartiments de descente (9) disposés en amont suivant la direction de transfert et qui sert au traitement ultérieur immédiat d'un granulat (G₂) ne convenant pas.

2. Installation de compactage suivant la revendication 1, **caractérisée en ce que** le dispositif de transfert à vis sans fin (5) est réalisé sous forme d'une vis sans fin multiple servant au mélange de matière en vrac.

3. Installation de compactage suivant la revendication 1 ou 2, **caractérisée en ce que** l'un des premiers compartiments de descente (9) suivant la direction de transfert est alimenté en granulat (G) de plus grosse granulométrie.
